Europäisches Patentamt

European Patent Office

Office européen des brevets

(19)

(11) Veröffentlichungsnummer: **0 007 524**
B1

# (12) EUROPÄISCHE PATENTSCHRIFT

(45) Veröffentlichungstag der Patentschrift:
28.07.82

(51) Int. Cl.³: **H 04 J 3/06**

(21) Anmeldenummer: 79102394.8

(22) Anmeldetag: 11.07.79

(54) Verfahren und Schaltungsanordnung zum Übertragen von Daten.

(30) Priorität: 26.07.78 DE 2832855

(43) Veröffentlichungstag der Anmeldung:
06.02.80 Patentblatt 80/3

(45) Bekanntmachung des Hinweises auf die Patenterteilung:
28.07.82 Patentblatt 82/30

(84) Benannte Vertragsstaaten:
AT BE CH IT NL SE

(56) Entgegenhaltungen:
FR-E-78 819
US-A-3 546 384
US-A-4 095 051

(73) Patentinhaber: SIEMENS AKTIENGESELLSCHAFT
Berlin und München, Postfach 22 02 61,
D-8000 München 22 (DE)

(72) Erfinder: Schenk, Erwin, Implerstrasse 53a,
D-8000 München 70 (DE)

EP 0 007 524 B1

Verfahren zum Übertragen von Daten.

Die Erfindung bezieht sich auf ein Verfahren zum Übertragen von Daten zwischen zwei Zeitmultiplexsystemen über eine gemeinsame Übertragungsstrecke, bei dem jedes Zeitmultiplexsystem aus jeweils einer vorgegebenen Anzahl von Binärzeichen gebildete Rahmen erzeugt, die die Daten und jeweils ein Synchronisierwort enthalten. Weiterhin bezieht sich die Erfindung auf eine Schaltungsanordnung zur Durchführung des Verfahrens.

Zeitmultiplexsysteme haben in den lezten Jahren gegenüber den bisher verwendeten Frequenzmultiplexsystemen sehr an Bedeutung gewonnen. Die Zeitmultiplexsysteme ordnen einen verfügbaren Bitstrom in periodisch wiederkehrender Weise zeitlich nacheinander jeweils einer Mehrzahl von Datenkanälen zu. Die Periode dieses Vorgangs wird als Rahmen bezeichnet. Jeder Rahmen enthält eine vorgegebene Anzahl von Binärzeichen, die neben den Daten ein Synchronisierwort darstellen, mit Hilfe dessen die Daten den Datenkanälen des Zeitmultiplexsystems zugeordnet werden.

Der Bitstrom hat eine vorgegebene Schrittgeschwindigkeit von beispielsweise 2400 bit/s. Falls Übertragungsstrecken zur Verfügung stehen, die eine grössere Schrittgeschwindigkeit, beispielsweise 4800 bit/s zulassen, ist es erwünscht, die Bitströme von mehreren Zeitmultiplexsystemen über diese Übertragungsstrecke zu übertragen. Bei einer derartigen Übertragung von Daten werden die entsprechenden Binärzeichen oder Rahmen zeitlich nacheinander über die Übertragungsstrecke übertragen. Auf der Empfangsseite müssen die Binärzeichen oder Rahmen wieder den entsprechenden Zeitmultiplexsystemen zugeordnet werden.

Aus der US-Patentschrift 4 095 051 ist ein Verfahren zum Übertragen von Daten bekannt, wonach sendeseitig zwei Bitströme mit je einem Rahmensynchronisierwort erzeugt und im Zeitmultiplexverfahren zu einem gemeinsamen Bitstrom vereinigt werden, der über eine Übertragungsstrecke zur Empfangsseite übertragen wird. Auf der Empfangsseite wird der gemeinsame Bitstrom einem empfangsseitigen Diplexer zugeführt, der die beiden einzelnen Bitströme wieder trennt und entsprechenden Sendeseiten der Zeitmultiplexsysteme zuführt. Diese Sendeseiten der Zeitmultiplexsysteme sind je auf die beiden Rahmensynchronisierworte eingestellt und können den Empfang der zugeordneten Synchronisierworte signalisieren. Dabei werden auf der Sendeseite verschiedene Rahmensynchronisierworte hinzugefügt und die Empfangsseiten sind in der Lage diese beiden verschiedenen Synchronisierworte zu erkennen. Insbesondere ist die erste Empfangsseite in der Lage das erste Synchronisierwort zu erkennen und die zweite Empfangsseite ist in der Lage das zweite Synchronisierwort zu erkennen. Wenn im Zuge der Einphasung beide Synchronisierworte erkannt werden, dann werden die Phasen der Empfangstakte nicht geändert und damit wird die vorliegende Zuordnung der Sendeseiten und Empfangsseiten beibehalten. Wenn dagegen die beiden Synchronisierworte auf der Empfangsseite nicht erkannt werden, dann werden die Phasen der Empfangstakte geändert und damit ändern sich auch die Zuordnungen der Sendeseiten und Empfangsseiten der Zeitmultiplexsysteme.

Wenn nach dem bekannten Verfahren in den Empfangsseiten beide Synchronisierworte erkannt werden, dann ist eine einwandfreie Datenübertragung zu erwarten. Wenn jedoch mit eventuellen Störungen zu rechnen ist, und wenn die Empfangsseiten eines der beiden Synchronisierworte oder beide Synchronisierworte nicht erkennen, dann kann dies durch die noch nicht vollzogene Einphasung begründet sein, aber auch durch eine gestörte Übertragungsstrecke. In beiden Fällen werden – offenbar während vorgegebener Zeiten – die Phasen der Empfangstakte geändert, was nicht in allen Fällen vorteilhaft sein muss. Wenn beispielsweise die richtige Zuordnung gegeben ist und wenn nur eine Empfangsseite wegen einer Störung ihr Synchronisierwort nicht erkennt, dann ist es nachteilig, wenn die Phasen der Empfangstakte geändert werden, weil dadurch die falsche Zuordnung eingestellt wird, welche bewirkt, dass nun auch das bisher befriedigend arbeitende Zeitmultiplexsystem ausfällt. Auch wenn beide Synchronisierworte auf der Empfangsseite auf Grund von Störungen nicht erkannt werden, aber eine richtige Zuordnung gegeben ist, werden die Phasen der Empfangstakte geändert, so dass nach dem Ende der Störungen ein neuerliches Einphasen erforderlich wird, das eine gewisse Zeit beansprucht, die zum Übertragen der Daten verloren geht.

Der Erfindung liegt die Aufgabe zugrunde, ein Verfahren zum Übertragen von Daten zwischen zwei Zeitmultiplexsystemen über eine gemeinsame Übertragungsstrecke anzugeben, bei dem eine richtige Zuordnung zu den Zeitmultiplexsystemen während der gesamten Übertragung der Daten überwacht wird.

Die der Erfindung zugrunde liegende Aufgabe wird dadurch gelöst, dass die Empfangsseiten der beiden Zeitmultiplexsysteme zu Beginn der Einphasung auf die Erkennung des ersten Synchronisierwortes eingestellt werden, dass die Synchronisiererkennungssignale dem empfangsseitigen Diplexer zugeführt werden, der erkennt, ob die Zuordnung der Sendeseiten und Empfangsseiten richtig oder falsch ist, dass der empfangsseitige Diplexer bei richtiger Zuordnung an die zweite Empfangsseite des zweiten Zeitmultiplexsystems ein Signal abgibt mit dem die zweite Empfangsseite auf die Erkennung des zweiten Synchronisierwortes eingestellt wird und dass der empfangsseitige Diplexer nur bei falscher Zuordnung die Phasen der Empfangstakte vertauscht.

Das Verfahren gemäss der vorliegenden Erfindung hat den Vorteil, dass die richtige Zuordnung der Daten zu den Zeitmultiplexsystemen auch unter Berücksichtigung von Störungen überwachbar ist. Dies deshalb, weil zu Beginn der Einphasung bei strüngsfreiem Empfang eines der beiden Zeitmultiplexsysteme das zur Erkennung vorgesehene Synchronisierwort erkennen muss. Wenn also keines der beiden Zeitmultiplexsysteme das zur Erkennung vorgesehene Synchronisierwort erkennt, dann ist der Empfang gestört.

Falls eines der Zeitmultiplexsysteme während der Übertragung der Daten infolge einer Störung das zugeordnete Synchronisierwort nicht erkennt, dann wird deshalb die Zuordnung der Daten zu den Zeitmultiplexsystemen nicht beeinflusst. Nach dem Abklingen der Störung ist keine neuerliche Einphasung erforderlich; die Datenübertragung kann also unverzüglich wieder aufgenommen werden.

Das Einsynchronisieren der Empfangszeiten der Zeitmultiplexsysteme erfolgt, wenn nach dem Erkennen des ersten Synchronisierwortes in der Empfangsseite des ersten Zeitmultiplexsystems die Empfangsseite des zweiten Zeitmultiplexsystems auf das zweite Synchronisierwort eingestellt wird, oder wenn nach dem Erkennen des ersten Synchronisierwortes in der Empfangsseite des zweiten Zeitmultiplexsystems die Zuordnung der empfangenen Binärzeichen zu den Empfangsseiten der Zeitmultiplexsysteme vertauscht wird und die Empfangsseite des zweiten Zeitmultiplexsystems auf das zweite Synchronisierwort eingestellt wird.

Bereits vorhandene Zeitmultiplexsysteme können teilweise ohne Änderung und teilweise mit geringfügigen Änderungen eingesetzt werden, wenn als erstes Synchronisierwort das bei einer Übertragung von Daten in Zeitmultiplexsystemen üblicherweise vorgesehene Synchronisierwort verwendet wird und wenn sich das zweite Synchronisierwort von diesem nur durch ein geändertes Binärzeichen unterscheidet. Entsprechend einer CCITT-Empfehlung R. 101, Version B ist es dabei vorteilhaft, wenn das erste Synchronisierwort die Binärzeichen 100010 enthält und wenn das zweite Synchronisierwort die Binärzeichen 110010 enthält.

Eine Schaltungsanordnung zur Durchführung des Verfahrens erfordert einen geringen Aufwand, wenn den Sendeseiten der Zeitmultiplexsysteme ein sendeseitiger Diplexer nachgeschaltet ist, der wechselweise jeweils Binärzeichen des ersten bzw. zweiten Zeitmultiplexsystems über eine sendeseitige Übertragungseinheit zur Übertragungsstrecke durchschaltet und wenn einer empfangsseitigen Übertragungseinheit ein empfangsseitiger Diplexer nachgeschaltet ist, der die Binärzeichen wechselweise den Empfangsseiten der Zeitmultiplexsysteme zuordnet und der nach dem Erkennen des ersten Synchronisierwortes in der Empfangsseite eines Zeitmultiplexsystems die richtige Zuordnung der Rahmen zu den Zeitmultiplexsystemen herstellt.

Zum Einsynchronisieren der Empfangsseiten der Zeitmultiplexsysteme ist es zweckmässig,

wenn der empfangsseitige Diplexer nach dem Erkennen des ersten Synchronisierwortes in der Empfangsseite eines der Zeitmultiplexsysteme ein die Empfangsseite des zweiten Zeitmultiplexsystems auf das zweite Synchronisierwort einstellendes Signal abgibt.

Die richtige Zuordnung der Rahmen zu den Empfangsseiten der Zeitmultiplexsysteme wird auch dann auf einfache Weise hergestellt, wenn nach dem Erkennen des ersten Synchronisierwortes in der Empfangsseite des zweiten Zeitmultiplexsystems im empfangsseitigen Diplexer ein Empfangstakt der beiden Zeitmultiplexsysteme erzeugendes Flipflop derart gesteuert wird, dass es die Phasen der Empfangstakte vertauscht.

Die Überwachung der Zuordnung der Rahmen zu den Empfangsseiten der Zeitmultiplexsysteme kann auf einfache Weise auch dadurch erfolgen, dass der empfangsseitige Diplexer eine das erste Synchronisierwort erkennende Schaltstufe enthält, durch die im empfangsseitigen Diplexer ein Empfangstakt der beiden Zeitmultiplexsysteme erzeugendes Flipflop derart gesteuert wird, dass die Phasen der Empfangstakte vertauscht werden. Diese Schaltungsanordnung eignet sich auch für eine Übertragung von von einem synchronen Teilnehmer abgegebenen Daten anstelle des zweiten Zeitmultiplexsystems.

Im folgenden wird ein Ausführungsbeispiel einer Schaltungsanordnung zur Durchführung des Verfahrens anhand von Zeichnungen beschrieben.

Es zeigen:
Fig. 1 ein Blockschaltbild einer Übertragungsanordnung,
Fig. 2 ein Schaltbild eines sendeseitigen Diplexers,
Fig. 3 Zeitdiagramme von Signalen an verschiedenen Punkten des sendeseitigen Diplexers,
Fig. 4 ein Schaltbild eines ersten empfangsseitigen Diplexers,
Fig. 5 Zeitdiagramme von Signalen an verschiedenen Punkten des ersten empfangsseitigen Diplexers,
Fig. 6 ein Schaltbild eines zweiten empfangsseitigen Diplexers.

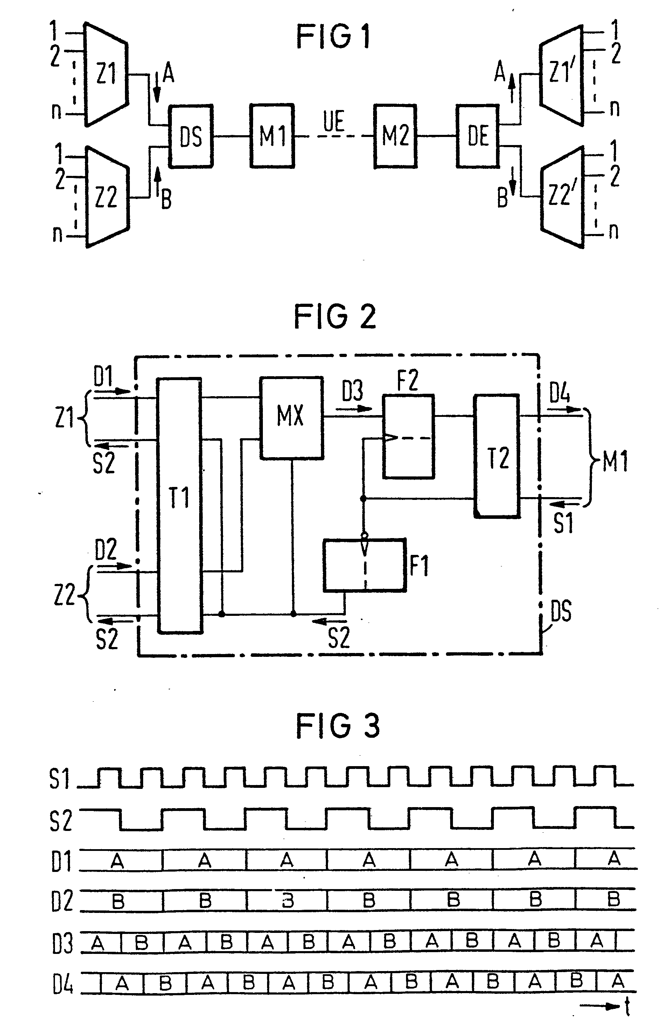

Bei der in Fig. 1 dargestellten Datenübertragungsanordnung werden Daten zwischen zwei Multiplexsystemen Z1, Z1' und Z2, Z2' über eine gemeinsame Übertragungsstrecke UE übertragen. Die Zeitmultiplexsysteme Z1, Z1' und Z2, Z2' sind in bekannter Weise ausgebildet, wie sie beispielsweise in einer Veröffentlichung «Zeitmultiplexsystem ZD1000-C1 für Fernschreib- und Datenübertragung», Siemens-Zeitschrift 52 (1978), Heft 3, Seite 128 bis 131 beschrieben sind. Die Sendeseiten Z1 bzw. Z2 der Zeitmultiplexsysteme führen eine bitweise Verschachtelung der Daten der jeweiligen Datenkanäle 1 bis n durch und geben die Daten in Form von aus einer Mehrzahl von Binärzeichen gebildeten Rahmen ab, die neben den Daten noch jeweils ein Synchronisierwort enthalten. Die Empfangsseiten Z1' und Z2' ordnen die in den Rahmen enthaltenen Daten unter Verwendung des Synchronisierwortes wieder den einzelnen Datenkanälen 1 bis n zu.

Falls für die Übertragung der Daten eine Übertragungsstrecke UE zur Verfügung steht, die eine mehrfache Schrittgeschwindigkeit eines Zeitmultiplexsystems zulässt, werden die aus Binärzeichen A bzw. B bestehenden Bitströme der beiden Zeitmultiplexsysteme Z1, Z1' und Z2, Z2' unter Verwendung einer Diplexeinrichtung zusammengefasst. Die Diplexeinrichtung enthält einen sendeseitigen Diplexer DS, der die von den beiden Sendeseiten Z1 und Z2 der Zeitmultiplexsysteme abgegebenen Binärzeichen A und B zeitlich verschachtelt und über eine sendeseitige Übertragungseinheit M1 an die Übertragungsstrecke UE abgibt. Die Diplexeinrichtung enthält weiterhin einen empfangsseitigen Diplexer DE, der über eine empfangsseitige Übertragungseinheit M2 mit der Übertragungsstrecke UE verbunden ist. Der empfangsseitige Diplexer DE ordnet die Binärzeichen A und B den Empfangsseiten Z1' und Z2' der Zeitmultiplexsysteme wieder zu, so dass die Daten unter Verwendung der Synchronisierwörter an die jeweiligen Datenkanäle 1 bis n der beiden Zeitmultiplexsysteme abgegeben werden können.

Die Binärzeichen A bzw. B stellen in Fig. 1 sowohl die in einem Rahmen enthaltenen Datenzeichen als auch die Synchronisierwörter dar. Während der Übertragung von Daten arbeitet das Zeitmultiplexsystem Z1, Z1' mit einem ersten Synchronisierwort, das beispielsweise dem bei Zeitmultiplexsystemen entsprechend der CCITT-Empfehlung R 101, Version B verwendeten Synchronisierwort mit dem Binärzeichen 100010 entspricht. Das Zeitmultiplexsystem Z2, Z2' arbeitet mit einem zweiten Synchronisierwort, das vom ersten Synchronisierwort verschieden ist und beispielsweise sich von diesem nur durch ein geändertes Binärzeichen unterscheidet und die Binärzeichen 110010 enthält. Die Sendeseiten Z1 und Z2 senden ständig das erste bzw. das zweite Synchronisierwort aus, während die Empfangsseiten Z1' und Z2' zu Beginn der Übertragung von Daten auf das erste Synchronisierwort eingestellt werden. Wenn in einer der Empfangsseiten Z1' oder Z2' das erste Synchronisierwort erkannt wird, wird die Empfangsseite Z2' auf das zweite Synchronisierwort eingestellt und die richtige Zuordnung der Bitströme A und B zu den Zeitmultiplexsystemen hergestellt.

Als Übertragungseinheiten M1 und M2 sind beispielsweise Modems vorgesehen. Im folgenden wird angenommen, dass die Bitströme jedes Zeitmultiplexsystems mit einer Schrittgeschwindigkeit von 2400 bit/s abgegeben werden und die Übertragungsstrecke für eine Schrittgeschwindigkeit von 4800 bit/s ausgelegt ist.

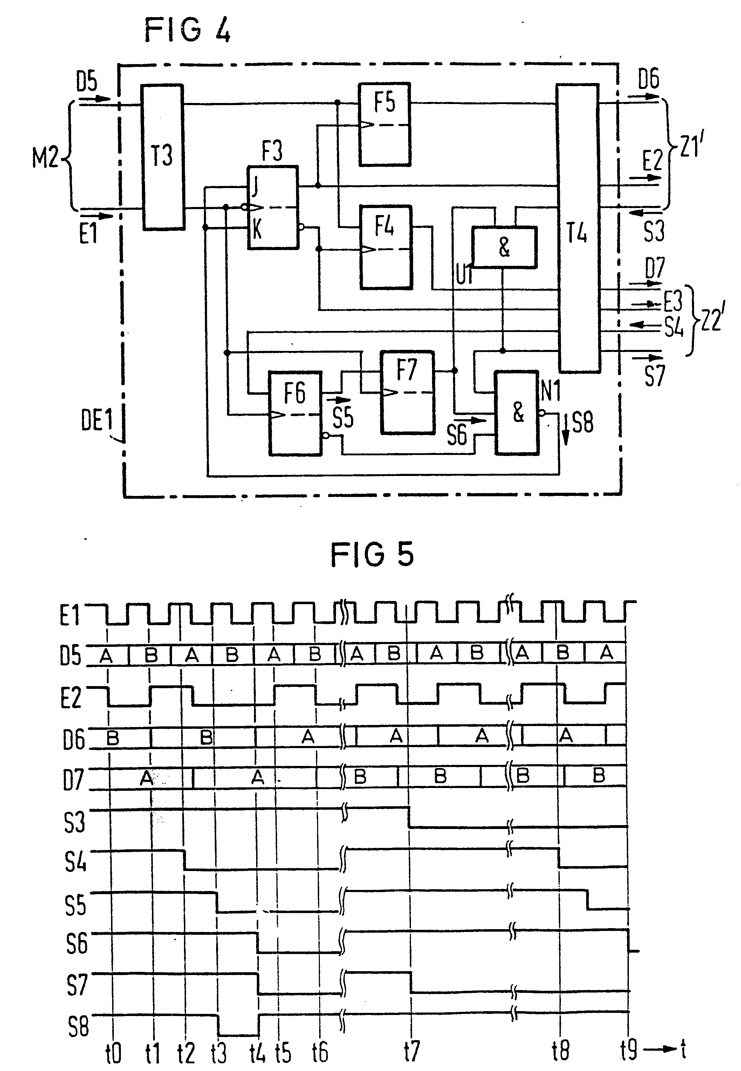

Der in Fig. 2 dargestellte, sendeseitige Diplexer DS enthält einen Multiplexer MX und zwei Flipflops F1 und F2. Weiterhin enthält er zwei Trennstufen T1 und T2, die zur Anpassung der Schnittstellen gegebenenfalls Pegelumsetzer enthalten. Weitere Einzelheiten der Fig. 2 werden zusammen mit den in Fig. 3 dargestellten Zeitdiagrammen beschrieben.

Bei den in Fig. 3 dargestellten Zeitdiagrammen sind in Abszissenrichtung die Zeit t und in Ordinatenrichtung Signale an verschiedenen Punkten des sendeseitigen Diplexers DS dargestellt.

Die Übertragungseinheit M1 gibt Sendetakte S mit einer Folgefrequenz von 4,8 kHz über die Trennstufe T2 an die Flipflops F1 und F2 ab. Mit jeder fallenden Flanke der Sendetakte S1 ändert das Flipflop F1, das als Frequenzteiler dient, seinen Zustand und es gibt an seinem Ausgang Sendetakte S2 mit einer Folgefrequenz von 2,4 kHz einerseits über die Trennstufe T1 an die Sendeseiten Z1 und Z2 der Zeitmultiplexsysteme und anderseits an den Auswahleingang des Multiplexers MX ab. In Abhängigkeit von den Sendetakten S2 geben die Sendeseiten Z1 und Z2 Datensignale D1 bzw. D2 ab, die die den Daten und den Synchronisierwörtern zugeordneten Binärzeichen A bzw. B der jeweiligen Rahmen darstellen. Der Multiplexer MX schaltet in Abhängigkeit von den Binärwerten der Sendetakte S2 abwechselnd die Binärzeichen A und B als Signale S3 zum Dateneingang des Flipflops F2 durch. Das Flipflop F2 gibt, gesteuert durch die Sendetakte S1 an seinem Ausgang über die Trennstufe T2 die Datensignale D4 an die Übertragungseinheit M1 ab. Diese Datensignale D4 entsprechen den zeitlich versetzten Signalen D3 und stellen die zeitlich verschachtelten Binärzeichen A und B der von den Sendeseiten Z1 und Z2 der Zeitmultiplexsysteme abgegebenen Rahmen dar.

Der in Fig. 4 dargestellte empfangsseitige Diplexer DE1 teilt den von der Übertragungseinheit M2 empfangenen Bitstrom wieder an die beiden Zeitmultiplexsysteme auf. Er enthält fünf Flipflops F3 bis F7, ein UND-Glied U1 und ein NAND-Glied N1, sowie zwei Trennstufen T3 und T4 zur Anpassung der Pegel der über die Schnittstellen übertragenen Signale. Dem empfangsseitigen Diplexer DE1 werden von der Übertragungseinheit M2 Empfangstakte E1 mit einer Folgefrequenz von 4,8 kHz und den Datensignalen D4 entsprechende Datensignale D5 zugeführt. An die Empfangsseiten Z1' und Z2' gibt der Diplexer DE1 empfangene Daten D6 und zugehörige Empfangstakte E2 bzw. empfangene Daten D7 und zugehörige Empfangstakte E3 ab. Die Empfangsseiten Z1' und Z2' geben an den Diplexer DE1 Signale S3 bzw. S4 ab, wenn die jeweiligen Synchronisierwörter erkannt wurden. Weiterhin gibt der Diplexer DE1 an die Empfangsseite Z2' ein Signal S7 ab, mit dem diese auf das zweite Synchronisierwort eingestellt wird.

Weitere Einzelheiten des Diplexers DE1 werden im folgenden zusammen mit den in Fig. 5 dargestellten Zeitdiagrammen beschrieben.

Bei den in Fig. 5 dargestellten Zeitdiagrammen sind in Abszissenrichtung die Zeit t und in Ordinatenrichtung die Momentanwerte von Signalen dargestellt, wie sie beim Betrieb des Diplexers DE1 anfallen.

Die von der Übertragungseinheit M2 gemeinsam mit den Datensignalen D5 abgegebenen Empfangstakte E1 mit der Folgefrequenz von 4,8 kHz werden über die Trennstufe T3 dem JK-Flipflop F3 zugeführt. Wenn die Signale an den Eingängen J und K den Binärwert 1 haben, wird das Flipflop F3 mit jeder fallenden Flanke der Empfangstakte E1 gekippt. Die an seinem Ausgang abgegebenen Empfangstakte E2 und E3 haben dann die Folgefrequenz von 2,4 kHz.

Zum Zeitpunkt t0 wird angenommen, dass mit der fallenden Flanke des Empfangstaktes E1 der Empfangstakt E2 seinen Binärwert von 1 nach 0 ändert. Gleichzeitig ändert der Empfangstakt E3 seinen Binärwert von 0 nach 1. Weiterhin wird angenommen, dass die durch die Datensignale D5 dargestellten Binärzeichen A und B in der dargestellten Reihenfolge auftreten. Zum Zeitpunkt t0 wird daher mit dem Empfangstakt E3 der Binärwert des Binärzeichens A in das Flipflop F4 eingespeichert. In entsprechender Weise wird zum Zeitpunkt t1 mit dem Signal E2 der Binärwert des Binärzeichens B in das Flipflop F5 eingespeichert. Die Ausgangssignale der Flipflops F4 und F5 werden als Datensignale D7 bzw. D6 an die Empfangsseiten Z2' bzw. Z1' abgegeben.

Wegen einer noch fehlenden Synchronisierung der Sendeseiten Z1' und Z2' und des Diplexers DE1 ist die Zuordnung der Binärzeichen A und B noch fehlerhaft. Zum Zeitpunkt t2 wird angenommen, dass die Empfangsseite Z2' das erste Synchronisierwort erkennt und das Signal S4 abgibt, das den Binärwert 0 annimmt. Mit der nächstfolgenden ansteigenden Flanke des Empfangstakts E1 wird dieser Binärwert in das Flipflop F6 eingespeichert und das Signal S5 nimmt zum Zeitpunkt t3 den Binärwert 0 an. Unter der Annahme, dass die Signale S6 und S7 den Binärwert 1 haben, gibt das NAND-Glied N1 ein Signal S8 mit dem Binärwert 0 ab, das ein Kippen des Flipflops F3 mit der nächstfolgenden Rückflanke des Empfangstaktes E1 verhindert. Mit der nächstfolgenden ansteigenden Flanke des Empfangstakts E1 wird der Binärwert 0 in das Flipflop F6 eingespeichert und das Signal S6 nimmt den Binärwert 0 an. Damit nimmt auch das Signal S7 den Binärwert 0 an. Ausserdem nimmt das Signal S8 wieder den Binärwert 1 an und ermöglicht wieder ein Kippen des Flipflops F3.

Durch das Signal S8 erfolgte bei den Empfangstakten E2 und E3 ein Phasensprung von 180°, der einer Vertauschung der Phasen der Empfangstakte E2 und E3 entspricht. Mit den folgenden Empfangstakten E2 und E3 werden die Binärwerte der Binärzeichen A und B zu den Zeitpunkten t5 und t6 in das Flipflop F5 bzw. F4 eingespeichert. Die Zuordnung der Binärzeichen A und B zu den Zeitmultiplexsystemen ist damit richtiggestellt. Das Signal S7, das zum Zeitpunkt t4 den Binärwert 0 angenommen hat, stellt die Empfangsseite Z2' auf das zweite Synchronisierwort ein. Nach dem Erkennen des zweiten Synchronisierworts erfolgt die Übertragung zwischen den Datenkanälen 1 bis n der Zeitmultiplexsysteme.

Falls beim Einsynchronisieren die Empfangsseite Z1' zuerst das erste Synchronisierwort erkennt, ist die Zuordnung der Binärzeichen A und B zu den Empfangsseiten Z1' und Z2' bereits richtig und der Diplexer DE1 gibt zum Zeitpunkt t7 an die Empfangsseite Z2' das Signal S7 ab, das diese auf das zweite Synchronisierwort einstellt.

Wenn die Empfangsseite Z2' das zweite Synchronisierwort erkennt, gibt es, ebenso wie beim Erkennen des ersten Synchronisierwortes zum Zeitpunkt t2, zum Zeitpunkt t8 das Signal S4 ab, das den Binärwert 0 annimmt. In ähnlicher Weise wie zwischen den Zeitpunkten t2 und t4 werden zwischen den Zeitpunkten t8 und t9 die Signale S5 und S6 erzeugt. Die Binärwerte der Signale S7 und S8 bleiben unverändert, da das Signal S3 mit dem Binärwert 0 am Ausgang des UND-Glieds U1 das Signal S7 mit dem Binärwert 0 erzwingt und dieses am Ausgang des NAND-Glied N1 das Signal S8 mit dem Binärwert 1 erzwingt.

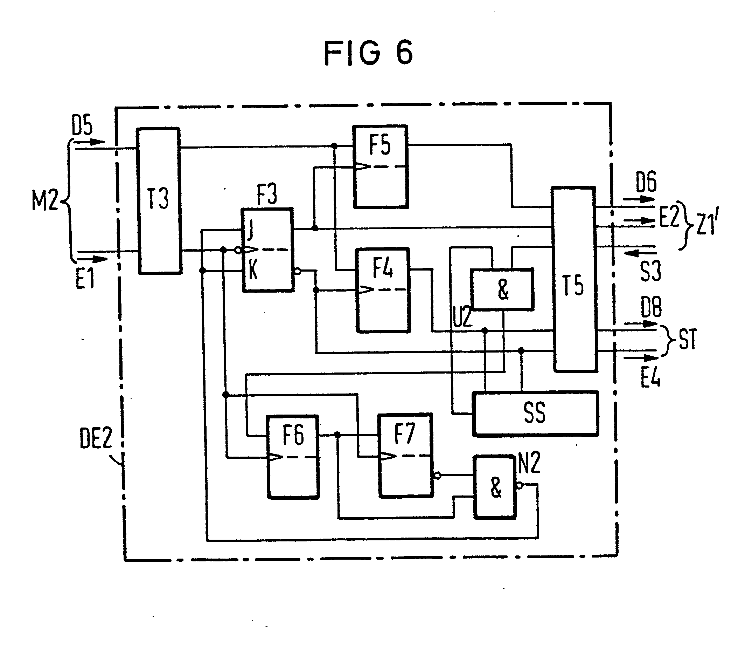

Die in Fig. 6 dargestellte Ausführungsform eines weiteren empfangsseitigen Diplexers DE2 unterscheidet sich von dem in Fig. 4 dargestellten Diplexer DE1 im wesentlichen nur dadurch, dass eine Schaltstufe SS vorgesehen ist, die in ähnlicher Weise wie eine in der Empfangsseite Z1' vorgesehene Schaltungsanordnung das erste Synchronisierwort erkennt. Wenn diese Schaltstufe SS in einem dem zweiten Zeitmultiplexsystem zugeordneten Bitstrom das erste Synchronisierwort erkennt, wird angenommen, dass eine falsche Zuordnung vorliegt und in ähnlicher Weise wie zwischen den Zeitpunkten t2 und t3 wird eine Phasenänderung der Empfangstakte E2 und E4 durchgeführt. Diese Ausführungsform eignet sich neben der Verwendung für zwei Zeitmultiplexsysteme auch für die Übertragung von Daten eines Zeitmultiplexsystems und eines Teilnehmers ST für eine synchrone Datenübertragung. Dieser Teilnehmer besitzt keine Schaltstufe, die Synchronwörter erkennt. Aus diesem Grund ist in dem Diplexer DE2 die Schaltstufe SS vorgesehen, die den dem Teilnehmer ST zugeführten Bitstrom auf das Auftreten des ersten Synchronisierwortes überprüft und gegebenenfalls die Zuordnung ändert. Die Schaltstufe SS kann man sich als zur Empfangsseite Z2' des Zeitmultiplexsystems des Teilnehmers ST gehörend denken.

## Patentansprüche

1. Verfahren zum Übertragen von Daten über zwei Sendeseiten (Z1, Z2) zweier Zeitmultiplexsysteme, über einen sendeseitigen Diplexer (DS), über eine Übertragungsstrecke (UE), über einen empfangsseitigen Diplexer (DE) zu zwei Empfangsseiten (Z1', Z2') der Zeitmultiplexsysteme, wonach die von der Sendeseite (Z1 bzw. Z2) des ersten bzw. zweiten Zeitmultiplexsystems (Z1, Z1' bzw. Z2, Z2') abgegebenen Daten (D1 bzw. D2) mit einem ersten bzw. zweiten Synchronisierwort versehen werden und wonach die Empfangsseiten (Z1' bzw. Z2') der Zeitmultiplexsysteme ein erstes bzw. zweites Synchronisiererkennungssignal (S3 bzw. S4) abgeben, falls das betreffende Synchronisierwort erkannt wird, dadurch gekennzeichnet, dass die Empfangsseiten (Z1', Z2') der beiden Zeitmultiplexsysteme (Z1, Z1' und Z2, Z2') zu Beginn der Einphasung auf die Erkennung des ersten Synchronisierwortes eingestellt werden, dass die Synchronisiererkennungssignale (S3, S4) dem empfangsseitigen Diplexer (DE) zugeführt werden, der erkennt, ob die Zuordnung der Sendeseiten und Empfangsseiten (Z1 zu Z1', Z2 zu Z2') richtig oder falsch ist, dass der empfangsseitige Diplexer (DE) bei richtiger Zuordnung an die zweite Empfangsseite (Z2') des zweiten Zeitmultiplexsystems ein Signal (S7) abgibt mit dem die zweite Empfangsseite (Z2') auf die Erkennung des zweiten Synchronisierwortes eingestellt wird und dass der empfangsseitige Diplexer (DE) nur bei falscher Zuordnung die Phasen der Empfangstakte (E2, E3) vertauscht.

2. Verfahren nach Anspruch 1, dadurch gekennzeichnet, dass nach dem Erkennen des ersten Synchronisierwortes in der Empfangsseite (Z1') des ersten Zeitmultiplexsystems (Z1, Z1') die Empfangsseite (Z2') des zweiten Zeitmultiplexsystems (Z2, Z2') auf das zweite Synchronisierwort eingestellt wird.

3. Verfahren nach Anspruch 1, dadurch gekennzeichnet, dass nach dem Erkennen des ersten Synchronisierwortes in der Empfangsseite (Z2') des zweiten Zeitmultiplexsystems (Z2, Z2') die Zuordnung der empfangenen Binärzeichen zu den Empfangsseiten (Z1', Z2') der Zeitmultiplexsysteme (Z1, Z1' und Z2, Z2') vertauscht wird und die Empfangsseite (Z2') des zweiten Zeitmultiplexsystems (Z2, Z2') auf das zweite Synchronisierwort eingestellt wird.

4. Verfahren nach einem der Ansprüche 1 bis 3, dadurch gekennzeichnet, dass als erstes Synchronisierwort das bei einer Übertragung von Daten in Zeitmultiplexsystemen üblicherweise vorgesehene Synchronisierwort verwendet wird und dass sich das zweite Synchronisierwort von diesem nur durch ein geändertes Binärzeichen unterscheidet.

5. Verfahren nach einem der Ansprüche 1 bis 4, dadurch gekennzeichnet, dass das erste Synchronisierwort die Binärzeichen 100010 enthält und dass das zweite Synchronisierwort die Binärzeichen 110010 enthält.

6. Schaltungsanordnung zur Durchführung des Verfahrens nach Anspruch 1, dadurch gekennzeichnet, dass den Sendeseiten (Z1, Z2) der Zeitmultiplexsysteme (Z1, Z1' und Z2, Z2') ein sendeseitiger Diplexer (DS) nachgeschaltet ist, der wechselweise jeweils Binärzeichen des ersten bzw. zweiten Zeitmultiplexsystems über eine sendeseitige Übertragungseinheit (M1) zur Übertragungsstrecke (UE) durchschaltet und dass einer empfangsseitigen Übertragungseinheit (M2) ein empfangsseitiger Diplexer (DE1, DE2) nachgeschaltet ist, der die Binärzeichen wechselweise den Empfangsseiten (Z1', Z2') der Zeitmultiplexsysteme (Z1, Z1' und Z2, Z2') zuordnet und der nach dem Erkennen des ersten Synchronwortes in der Empfangsseite (Z1', Z2') eines Zeitmultiplexsystems (Z1, Z1' und Z2, Z2') die richtige Zuordnung der Binärzeichen zu den Zeitmultiplexsystemen (Z1, Z1' und Z2, Z2') herstellt.

7. Schaltungsanordnung nach Anspruch 6, dadurch gekennzeichnet, dass der empfangsseitige Diplexer (DE1, DE2) nach dem Erkennen des ersten Synchronwortes in der Empfangsseite (Z1', Z2') eines der Zeitmultiplexsysteme (Z1, Z1' und Z2, Z2') ein die Empfangsseite (Z2') des zweiten Zeitmultiplexsystems (Z2, Z2') auf das zweite Synchronisierwort einstellendes Signal (S7) abgibt.

8. Schaltungsanordnung nach Anspruch 6 oder Anspruch 7, dadurch gekennzeichnet, dass nach dem Erkennen des ersten Synchronisierwortes in der Empfangsseite (Z2') des zweiten Zeitmultiplexsystems (Z2, Z2') im empfangsseitigen Diplexer (DE1, DE2) ein Empfangstakte (E2, E3) der Zeitmultiplexsysteme (Z1, Z1' und Z2, Z2') erzeugendes Flipflop (F3) derart gesteuert wird, dass es die Phasen der Empfangstakte (E2, E3) vertauscht.

9. Schaltungsanordnung nach Anspruch 6 oder Anspruch 7, dadurch gekennzeichnet, dass der empfangsseitige Diplexer (DE2) eine das erste Synchronisierwort erkennende Schaltstufe (SS) enthält, durch die im empfangsseitigen Diplexer (DE2) ein Empfangstakte (E2, E4) erzeugendes Flipflop (F3) derart gesteuert wird, dass die Phasen der Empfangstakte (E2, E4) vertauscht werden.

## Claims

1. Method for the transmission of data via two transmitting ends (Z1, Z2) of two t.d.m. systems, via a transmitting-end diplexer (DS), via a transmission link (UE), via a receiving-end diplexer (DE) to two receiving ends (Z1', Z2') of the t.d.m. systems, in accordance with which the items of data (D1 and D2) emitted from the transmitting ends (Z1 und Z2) of the first and second t.d.m. systems (Z1, Z1' and Z2, Z2') are provided with a first and second synchronising word respectively, and in accordance with which the receiving ends (Z1' and Z2') of the t.d.m. systems emit a first and second synchronisation recognition signal (S3 and S4) if the synchronising word in question is recognised, characterised in that the receiving ends (Z1', Z2') of the two t.d.m. systems (Z1, Z1' and Z2, Z2') are set up, at the beginning of the phasing-in process, to recognise the first synchronising word, that the synchronisation recognition signal (S3, S4) are fed to the receiving-end diplexer (DE) which recognises whether the assignment of the transmitting ends and receiving ends (Z1 to Z1' and Z2 to Z2') is correct or incorrect, that in the event of correct assignment the receiving-end diplexer (DE) supplies the second receiving end (Z2') of the second t.d.m. system with a signal (S7) by which the second receiving end (Z2') is set to recognise the second synchronising word, and that only in the event of incorrect assignment does the receiving-end diplexer (DE) exchange the phases of the receiving clock pulse trains (E2, E3).

2. Method as claimed in claim 1, characterised in that following the recognition of the first synchronising word at the receiving end (Z1') of the first t.d.m. system (Z1, Z1'), the receiving end (Z2') of the second t.d.m. system (Z2, Z2') is set to the second synchronising word.

3. Method as claimed in claim 1, characterised in that following the recognition of the first synchronising word at the receiving end (Z2') of the second t.d.m. system (Z2, Z2'), the assignment of the received binary symbols to the receiving ends (Z1', Z2') of the t.d.m. systems (Z1, Z1' and Z2, Z2') is interchanged and the receiving end (Z2') of the second t.d.m. system (Z2, Z2') is set at the second synchronising word.

4. Method as claimed in one of the claims 1 to 3 characterised in that the synchronising word normally provided for the transmission of data in t.d.m. systems is used by way of first synchronising word, and that the second synchronising word differs from the first only by virtue of one modified binary symbol.

5. Method as claimed in one of the claims 1 to 4, characterised in that the first synchronising word contains the binary symbols 100010, and that the second synchronising word contains the binary symbols 110010.

6. Circuit arrangement for the implementation of the method claimed in claim 1, characterised in that the transmitting ends (Z1, Z2) of the t.d.m. systems (Z1, Z1' and Z2, Z2') are followed by a transmitting-end diplexer (DS) which alternately switches through binary symbols of the first and second t.d.m. systems via a transmitting-end transmission unit (M1) to the transmission link (UE), and that a receiving-end transmission unit (M2) is followed by a receiving-end diplexer (DE1, DE2) which assigns the binary symbols alternately to the receiving ends (Z1', Z2') of the t.d.m. systems (Z1, Z1' and Z2, Z2') and which, following the recognition of the first synchronising word at the receiving en (Z1', Z2') of a t.d.m. system (Z1, Z1' and Z2, Z2') establishes the correct assignment of the binary symbols to the t.d.m. systems (Z1, Z1' and Z2, Z2').

7. Circuit arrangement as claimed in claim 6, characterised in that following the recognition of the first synchronising word at the receiving end (Z1', Z2') of one of the t.d.m. systems (Z1, Z1' and Z2, Z2'), the receiving-end diplexer (DE1, DE2) emits a signal (S7) which sets up the receiving end (Z2') of the second t.d.m. system (Z2, Z2') in accordance with the second synchronising word.

8. Circuit arrangement as claimed in claim 6 or claim 7, characterised in that following the recognition of the first synchronising word at the receiving end (Z2') of the second t.d.m. system (Z2, Z2'), in the receiving-end diplexer (DE1, DE2) a flip-flop (F3) which produces receiving clock pulse trains (E2, E3) of the t.d.m. systems (Z1, Z1' and Z2, Z2') is controlled in such manner that it interchanges the phases of the receiving clock pulse trains (E2, E3).

9. Circuit arrangement as claimed in claim 6 or claim 7, characterised in that the receiving-end diplexer (DE2) contains a switching stage (SS) which recognises the first synchronising word and which, in the receiving-end diplexer (DE2), controls a flip-flop (F3), whose function is to generate receiving clock pulse trains (E2, E4), in such manner that the phases of the receiving clock pulse trains (E2, E4) are interchanged.

## Revendications

1. Procédé pour transmettre des données par deux côtés d'émission (Z1, Z2) de deux systèmes de multiplexage par répartition dans le temps, par un diplex (DS) côté émission, par une voie de transmission (UE), par un diplex (DE) côté réception, vers deux côtés réception (Z1', Z2') des systèmes de multiplexage par répartition dans le temps, du type dans lequel les données (D1 et D2) émises par le côté émission (Z1, Z2) du premier ou du second système de multiplexage par répartition dans le temps (Z1, Z1' ou Z2, Z2') sont pourvues d'un premier et d'un second mots de synchronisation, et dans lequel les côtés réception (Z1' et Z2') des systèmes de multiplexage par répartition dans le temps émettent un premier et un second signal d'identification (S3 et S4) de la synchronisation, dans le cas où le mot de synchronisation concerné a été reconnu, caractérisé par le fait que les côtés réception (Z1', Z2') des deux systèmes de multiplexage par répartition dans le temps (Z1, Z1' et Z2, Z2') sont réglés au début de la mise en phase pour l'identification du premier mot de synchronisation, que les signaux d'identification de la synchronisation (S3, S4) sont appliqués au diplex (DE) côté réception, qui reconnaît si la coordination du côté émission et des côtés réception (Z1 avec Z1', Z2 avec Z2') est correcte ou erronée, que lors d'une coordination correcte, le diplex (DE) côté réception émet pour le second côté émission (Z2') du second système de multiplexage par répartition dans le temps, un signal (S7) à l'aide duquel le second côté réception (Z2') est réglé pour l'identification du second mot de synchronisation, et que le diplex (DE) côté réception remplace l'une par l'autre les phases des cadences de réception (E2, E3) uniquement si la coordination est erronée.

2. Procédé selon la revendication 1, caractérisé par le fait qu'après l'identification du premier mot de synchronisation du côté réception (Z1') du premier système de multiplexage par répartition dans le temps (Z1, Z1'), le côté réception (Z2') du second système de multiplexage par répartition dans le temps (Z2, Z2') est réglé sur le second mot de synchronisation.

3. Procédé selon la revendication 1, caractérisé par le fait qu'après l'identification du premier mot de synchronisation du côté réception (Z2') du second système de multiplexage par répartition dans le temps (Z2, Z2'), on remplace l'une par l'autre la coordination des signes binaires reçus par rapport au côté réception (Z1', Z2') des systèmes de multiplexage par répartition dans le temps (Z1, Z1' et Z2, Z2'), et le côté réception (Z2') du second système de multiplexage par répartition dans le temps (Z2, Z2') est réglé sur le second mot de synchronisation.

4. Procédé selon l'une des revendications 1 à 3, caractérisé par le fait que l'on utilise, comme premier mot de synchronisation le mot de synchronisation habituellement prévu lors d'une transmission de données dans des systèmes de multiplexage par répartition dans le temps, et que le second mot de synchronisation s'en distingue uniquement par un signe binaire modifié.

5. Procédé selon l'une des revendications 1 à 4, caractérisé par le fait que le premier mot de synchronisation comprend le signe binaire 100010 et que le second mot de synchronisation comprend le chiffre binaire 110010.

6. Montage pour la mise en œuvre du procédé selon la revendication 1, caractérisé par le fait qu'en aval des côtés émission (Z1, Z2) des systèmes de multiplexage par répartition dans le temps (Z1, Z1' et Z2, Z2') est monté un diplex (DS) côté émission qui transmet à la voie de transmission (UE) alternativement un signe binaire respectivement du premier et du second systèmes de multiplexage par répartition dans le temps, par l'intermédiaire d'une unité de transmission (M1) située du côté émission, et qu'en aval d'une unité de transmission (M2) située du côté réception, est prévu un diplex (DE1, DE2) côté réception, qui coordonne alternativement les signes binaires aux côtés réception (Z1', Z2') des systèmes de multiplexage par répartition dans le temps (Z1, Z1' et Z2, Z2') et qui, après l'identification du premier mot de synchronisation établit, du côté réception (Z1, Z2') d'un système de multiplexage par répartition dans le temps (Z1, Z1' et Z2, Z2'), la coordination correcte entre les signes binaires et les systèmes de multiplexage par répartition dans le temps (Z1, Z1' et Z2, Z2').

7. Montage selon la revendication 6, caractérisé par le fait que le diplex (DE1, DE2) situé du côté réception émet, après l'identification du premier mot de synchronisation du côté réception (Z1, Z2') de l'un des systèmes de multiplexage par répartition dans le temps (Z1, Z1' et Z2, Z2'), un signal (S7) qui ajuste le côté réception (Z2') du second système de multiplexage par répartition dans le temps (Z2, Z2') sur le second mot de synchronisation.

8. Montage selon la revendication 6 ou la revendication 7, caractérisé par le fait qu'après identification du premier mot de synchronisation dans le côté réception (Z2') du second système de multiplexage par répartition dans le tempes (Z2, Z2'), un multivibrateur bistable (F3) qui produit les cadences de réception (E2, E3) des systèmes de multiplexage par répartition dans le temps (Z1, Z1' et Z2, Z2'), est commandé de telle manière dans le diplex (DE1, ?) situé du côté réception qu'il remplace l'un  l'autre les phases des cadences de récept. (E2, E3).

9. Montage selon la revendication 6 ou la revendication 7, caractérisé par le fait que le diplex (DE2) situé du côté réception comporte un étage de commutation (SS) identifiant le premier mot de synchronisation et au moyen duquel est commandé un multivibrateur bistable (F3) produisant des cadences de réception (E2, E4), de manière que les phases des cadences de réception (E2, E4) soient remplacées l'une par l'autre.

# FIG 1

# FIG 2

# FIG 3

FIG 4

0 007 524

FIG 5

# FIG 6